# EUROPÄISCHE PATENTSCHRIFT

(11) **EP 2 978 646 B1**
(45) Veröffentlichungstag und Bekanntmachung des Hinweises auf die Patenterteilung: **18.12.2019**
(21) Anmeldenummer: 14712676.7
(22) Anmeldetag: 26.03.2014
(51) Int. Cl.: B60T 17/00, B01D 53/26

(54) **LUFTTROCKNERPATRONE MIT INTEGRIERTEM KOALESZENZFILTER/GROBSCHMUTZFILTER**
AIR DRYER CARTRIDGE WITH COALESCENT FILTER
CARTOUCHE DE DESSICCATEUR D'AIR AVEC FILTRE À COALESCENCE

(30) Priorität: 26.03.2013 DE 102013103066
(43) Veröffentlichungstag der Anmeldung: 03.02.2016
(73) Patentinhaber: KNORR-BREMSE Systeme für Nutzfahrzeuge GmbH, 80809 München (DE)
(72) Erfinder: EIDENSCHINK, Rainer, 81927 München (DE)
(86) Internationale Anmeldenummer: PCT/EP2014/056074
(87) Internationale Veröffentlichungsnummer: WO 2014/154756

(56) Entgegenhaltungen:
- EP-A1- 0 608 606
- WO-A1-00/26074
- DE-A1-102006 037 311
- US-A- 5 792 245
- US-A1- 2004 016 342

## Beschreibung

Die Erfindung betrifft eine Luftfilterpatrone zur Montage an einer Luftaufbereitungsanlage eines Fahrzeuges, insbesondere eines Nutzfahrzeuges, umfassend ein ein Trockenmittel beinhaltendes Gehäuse und einen vom Trockenmittel über ein innenliegendes Granulatgehäuse getrennt angeordneten Koaleszenzfilter/Grobschmutzfilter, welcher zur Vorfilterung der über einen Lufteinlass einströmenden Druckluft dem Trockenmittel vorgeschaltet ist.

Das Einsatzgebiet der Erfindung erstreckt sich vornehmlich auf Nutzfahrzeuge. Diese können über verschiedene druckluftverbrauchende Systeme verfügen. Insbesondere Betriebsbremsen von Nutzkraftwagen sind in der Regel druckluftbetätigt. Um eine sichere Versorgung aller druckluftverbrauchenden Systeme eines Fahrzeuges sicherstellen zu können, ist es allgemein bekannt, einen Druckluftkompressor zu verwenden, welcher vom Antriebsmotor des Fahrzeuges angetrieben wird, um die zum Betrieb des Fahrzeuges notwendige Druckluft zu erzeugen.

Da ein Druckluftkompressor die Druckluft durch Ansaugen und Verdichten von Umgebungsluft erzeugt, enthält die Druckluft einen hohen Anteil an Wasser in Form von Feuchtigkeit. Weiterhin enthält die vom Druckluftkompressor bereitgestellte Druckluft Schmutzpartikel, welche bereits in der angesaugten Luft enthalten waren, sowie Öl- und Rußpartikel, welche während des Verdichtungsprozesses in die Druckluft eingetragen werden. Die in der Druckluft enthaltene Feuchtigkeit und die übrigen Schmutzpartikel können sich in den druckluftverbrauchenden Systemen des Fahrzeuges ablagern und deren Funktionsfähigkeit nachhaltig beeinträchtigen, wenn diese nicht von der erzeugten Druckluft getrennt werden.

In der Regel werden zur Trennung der Druckluft von Öl- und Schmutzpartikeln und zur Trocknung Druckluftaufbereitungsanlagen vorgesehen, welche die von dem Druckluftkompressor bereitgestellte Druckluft von Öl- und Schmutzpartikeln befreien und trocknen. Um diese Druckluftaufbereitung gewährleisten zu können, werden in der Regel Luftfilterpatronen verwendet, welche zunächst die Öl- und Schmutzpartikel von der Druckluft abtrennen und anschließend mit Hilfe eines Trockenmittels der Druckluft die Feuchtigkeit entziehen.

Aus der DE 10 2009 030 897 A1 geht eine derartige Luftfilterpatrone für eine Druckluftaufbereitungsanlage eines Fahrzeuges hervor. Diese besteht im Wesentlichen aus einer mit einem Trockenmittel befüllten Trockenmittelbox, welche wiederum in einem Gehäuse angeordnet ist. Das Gehäuse wird im unteren Bereich von einer bodenseitigen Platte mit einem Lufteinlass und einem Luftauslass verschlossen. Die bodenseitige Platte und das Gehäuse sind über eine Bördelnaht fest miteinander verbunden. Zwischen der bodenseitigen Platte und dem Gehäuse sind diverse Dichtungen angeordnet. Die innenliegende Trockenmittelbox ist in ihrer axialen Erstreckungsrichtung von einem ersten Luftfilter und einem zweiten Luftfilter begrenzt, welche das Trockenmittel im Inneren der Trockenmittelbox zurückhalten.

Im oberen Bereich der Luftfilterpatrone ist weiterhin eine Druckfeder und ein Granulatdeckel vorgesehen, über die das Trockenmittel im Inneren der Trockenmittelbox komprimiert wird. Der Granulatdeckel ist luftdurchlässig ausgeführt. Ein Koaleszenzfilter erstreckt sich in axialer Richtung um die untere Hälfte der Trockenmittelbox und wird in radialer Richtung von einer Manschette an einer Tragekonstruktion der Trockenmittelbox fixiert.

Der Koaleszenzfilter unterteilt die Lufttrocknerpatrone in einen Vorfilterbereich und einen Nachfilterbereich. Aufgabe des dem Vorfilterbereich zugeordneten Koaleszenzfilters ist es, während einer Druckluftförderphase Öl- und Schmutzpartikel sowie Emulsionströpfchen an einer Anströmfläche festzuhalten, flüssiges Öl zu speichern und feinste Öltröpfchen und Aerosole durch einen Koaleszenzeffekt in flüssiges Öl umzuwandeln und abzuscheiden. Eine geeignete Dimensionierung des Koaleszenzfilters stellt sicher, dass keine Öltröpfchen über den Nachfilterbereich in die Trockenmittelbox gelangen und so die Lebensdauer der Lufttrocknerpatrone und nachgeordneter Verbraucher verkürzen.

Aus der WO 00/26074 A1 ist eine Luftfilterpatrone zur Montage an einer Luftaufbereitungsanlage eines Fahrzeuges bekannt, die ein ein Trockenmittel beinhaltendes Gehäuse und einen vom Trockenmittel über ein innenliegendes Granulatgehäuse getrennt angeordneten Grobschmutzfilter umfasst. Der Grobschmutzfilter ist zur Vorfilterung der über einen Lufteinlass einströmenden Druckluft dem Trockenmittel vorgeschaltet. Das innenliegende kolbenartige Granulatgehäuse ist axial bewegbar gegenüber dem äußeren Gehäuse angeordnet und an der dem Trockenmittel gegenüberliegenden Stirnseite mit einer Druckfeder beaufschlagt, um das im Gehäuse befindliche Trockenmittel zu komprimieren.

Nachteilhaft bei derartigen Luftfilterpatronen erweist sich die hohe Anzahl an Einzelteilen zur Realisierung eines wirksamen Vorfilter- und Nachfilterbereichs, womit auch ein entsprechend hoher Montageaufwand verbunden ist.

Es ist daher die Aufgabe der vorliegenden Erfindung, eine Luftfilterpatrone zur Montage an einer Luftaufbereitungsanlage eines Fahrzeuges zu schaffen, welche über wenige Einzelteile verfügend einem geringen Montageaufwand unterliegt.

Die Aufgabe wird ausgehend von einer Luftfilterpatrone gemäß dem Oberbegriff von Anspruch 1 in Verbindung mit dessen kennzeichnenden Merkmalen gelöst. Die nachfolgenden abhängigen Ansprüche geben vorteilhafte Weiterbildungen der Erfindung wieder.

Die Erfindung schließt die technische Lehre ein, dass das innenliegende Granulatgehäuse zur Abtrennung des Vorfilterbereichs vom Nachfilterbereich kolbenartig ausgebildet ist und axial bewegbar gegenüber dem äußeren Gehäuse angeordnet und an der dem Trockenmittel gegenüberliegenden Stirnseite mit einer Druckfeder beaufschlagt ist, um das direkt im Gehäuse befindliche Trockenmittel zu komprimieren.

Der Vorteil der erfindungsgemäßen Lösung liegt darin, dass eine innerhalb des Gehäuses der Luftfilterpatrone angeordnete Trockenmittelbox entfällt und dass das diese Funktion übernehmende Granulatgehäuse als Kolben geformt gegenüber dem Gehäuse der Luftfilterpatrone eine Kolben-Zylinder-Anordnung bildet. Weiterhin gestattet es die erfindungsgemäße Lösung, die Druckfeder zum Komprimieren des Trockenmittels in dem Bodenbereich der Luftfilterpatrone zu verlagern, was den Montageaufwand verbessert. Außerdem entfällt ein ansonsten üblicher Granulatdeckel, da diese Funktion durch das kolbenartige Granulatgehäuse übernommen wird. Die erfindungsgemäße Lösung gestattet demnach eine Funktionsintegration einer Abtrenn- und Gehäusefunktion mit einer Druckbeaufschlagungsfunktion für das Trockenmittel.

Gemäß einer bevorzugten Ausführungsform ist das kolbenartige Granulatgehäuse mit einer außenradial umlaufenden Dichtlippe zur Abdichtung gegenüber der Innenwandung des Gehäuses versehen. Diese dynamische Dichtung kann neben einer direkt an das vorzugsweise aus Kunststoff bestehende Granulatgehäuse angeformten Dichtlippe auch mit einem separaten Dichtelement, beispielsweise einem O-Ring realisiert werden, welcher aus einem Elastomermaterial bestehend zwischen Granulatgehäuse und der Innenwandung des Gehäuses montiert sein kann. Die dynamische Abdichtung verhindert ein Entweichen des Trockenmittels aus dem Granulatgehäuse.

Das kolbenartige Granulatgehäuse weist gemäß einer weiteren, die Erfindung verbessernden Maßnahme seitens des Trockenmittels eine koaxiale hülsenartige Anformung auf, welche zur Umlenkung des Strömungsweges der Druckluft durch das Trockenmittel dient. Somit bildet die hülsenartige Anformung eine Art Luftleitelement, welches in axialer Richtung vom kolbenartigen Granulatgehäuse ausgehend in das Trockenmittel hineinragt und somit einen verlängerten Strömungsweg durch das Trockenmittel bildet, so dass eine wirksame Trocknung der Druckluft bei minimalen äußeren Abmessungen der Luftfilterpatrone gewährleistet wird.

Das kolbenartige Granulatgehäuse weist gemäß einer anderen, die Erfindung verbessernden Maßnahme eine Zentralöffnung zum Luftauslass der gefilterten Druckluft auf, welche mit einem Filtervlies versehen ist.

Vorzugsweise ist die Druckfeder zum Komprimieren des sich im Gehäuse befindlichen Trockenmittels zwischen dem Granulatgehäuse und einem bodenseitig am Gehäuse angeordneten, flachen Befestigungsflansch wirkend angeordnet. Hierdurch kann auf einen ansonsten üblichen, zusätzlichen Granulatdeckel verzichtet werden, da das Granulatgehäuse selbst die Komprimierungsfunktion für das Trockenmittel übernimmt. Ferner lässt sich die Druckfeder platzsparend im Bereich des erfindungsgemäß ausgebildeten, kolbenartigen Granulatgehäuses anordnen.

Dasselbe gilt auch hinsichtlich des ringförmigen Koaleszenzfilters/Grobschmutzfilter, welcher vorzugsweise zwischen dem kolbenartigen Granulatgehäuse und dem flachen Befestigungsflansch platziert ist. Der Koaleszenzfilter kann als verpresstes Vliesgewirk, in axial aufeinander gestapelten Vliesscheiben oder gewickelten Vliesbahnen bestehen. Der Grobschmutzfilter kann ebenfalls nach den oben genannten Methoden aufgebaut sein.

Das kolbenartige Granulatgehäuse kann seitens des Koaleszenzfilters/Grobschmutzfilter eine erste koaxiale, hülsenartige Anformung zur Führung der Druckfeder aufweisen. Die hülsenartige Anformung lässt sich in einfacher Weise spritzgießtechnisch herstellen, da das gesamte Granulatgehäuse vorzugsweise aus einem Kunststoffmaterial gefertigt ist.

In Ergänzung hierzu kann das kolbenartige Granulatgehäuse seitens des Koaleszenzfilters/Grobschmutzfilter eine die besagte erste hülsenartige Anformung koaxial umgebende zweite hülsenartige Anformung aufweisen. Die zweite hülsenartige Anformung dient speziell einem einfachen Aufstecken des ringförmigen Koaleszenzfilters/Grobschmutzfilter, so dass das Granulatgehäuse in einer weiteren optionalen Funktionserweiterung auch der Aufnahme und Lagefixierung des ringförmigen Koaleszenzfilters/Grobschmutzfilter dient. Insoweit sind hierfür keine weiteren zusätzlichen Bauteile erforderlich.

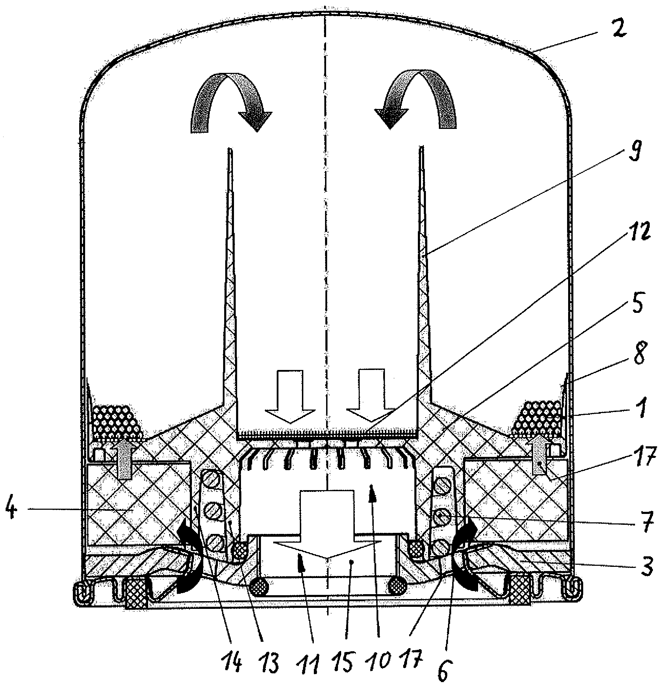

Weitere, die Erfindung verbessernde Maßnahmen werden nachstehend gemeinsam mit der Beschreibung eines bevorzugten Ausführungsbeispiels der Erfindung anhand der Zeichnung näher dargestellt.

Die einzige Figur zeigt einen Längsschnitt durch eine Luftfilterpatrone zur Montage an einer - nicht weiter dargestellten - Luftaufbereitungsanlage des Fahrzeugs.

Gemäß Figur besteht die Luftfilterpatrone im Wesentlichen aus einem ein Trockenmittel 1 beinhaltendes, topfförmiges Gehäuse 2, welches bodenseitig durch einen flachen Befestigungflansch 3 umformtechnisch verschlossen ist. Innerhalb des Gehäuses 2 ist ein Koaleszenzfilter/Grobschmutzfilter 4 über ein innenliegendes Granulatgehäuse 5 getrennt vom Trockenmittel 1 angeordnet. Der Koaleszenzfilter/Grobschmutzfilter 4 ist zur Vorfilterung der über einen Lufteinlass 6 in die Luftfilterpatrone einströmenden Druckluft dem Trockenmittel 1 vorgeschaltet.

Das innenliegende, kolbenartige Granulatgehäuse 5 ist axial bewegbar gegenüber dem äußeren Gehäuse 2 angeordnet und an der dem Trockenmittel 1 gegenüberliegenden Stirnseite mit einer Druckfeder 7 beaufschlagt, um das in Gehäuse 2 befindliche Druckmittel 1 zu kompensieren.

Zur dynamischen Abdichtung gegenüber der Innenwandung des Gehäuses 2 ist das kolbenartige Granulatgehäuse 5 mit einer außenradial umlaufenden Dichtlippe 8 versehen.

Das kolbenartige Granulatgehäuse 5 besteht aus spritzgegossenem Kunststoff und weist verschiedenartige Anformungen auf. So ist seitens des Trockenmittels 1 eine koaxiale, hülsenartige Anformung 9 vorgesehen, welche einer Umlenkung des Strömungsweges der Druckluft durch das Trockenmittel 1 bewirkt. Das Granulatgehäuse 5 ist mit einer koaxialen Zentralöffnung 10 zum Luftauslass 11 für die gefilterte Druckluft versehen. Die Zentralöffnung 10 ist zudem mit einem Filtervlies 12 bedeckt.

Die das Trockenmittel 1 komprimierende Druckfeder 7 ist zwischen dem Granulatgehäuse 5 und einem bodenseitig am Gehäuse 2 angeordneten flachen Befestigungsflansch 3 angeordnet. Der ringförmige Koaleszenzfilter/Grobschmutzfilter 4 umgibt die Druckfeder 7 und ist zwischen dem kolbenartigen Granulatgehäuse 5 und dem flachen Befestigungsflansch 3 angeordnet. Zur Führung der Druckfeder 7 besitzt das kolbenartige Granulatgehäuse 5 seitens des Koaleszenzfilters/Grobschmutzfilter 4 eine erste hülsenartige Anformung 13. Eine diese erste hülsenartige Anformung 13 koaxial umgebende zweite hülsenartige Anformung 14 dient der Lagefixierung des ringförmigen Koaleszenzfilters/Grobschmutzfilter 4, welcher hierauf aufgesteckt ist.

Ferner weist der flache Befestigungsflansch 3 eine mit dem Luftauslass 11 korrespondierende zentrale Gewindebohrung 15 auf, über welche die Luftfilterpatrone an der - hier nicht weiter dargestellten - Luftaufbereitungsanlage befestigt ist. Um die zentrale Gewindebohrung 15 herum sind mehrere Öffnungen 16 für den Lufteinlass 6 vorgesehen.

Das kolbenartige Granulatgehäuse 5 ist im Bereich des hieran zur Anlage kommenden, ringförmigen Koaleszenzfilters/Grobschmutzfilter 4 mit mehreren Durchgangsöffnungen 17 zum Durchströmen der Druckluft vom Koaleszenzfilter/Grobschmutzfilter 4 zum Trockenmittel 1 versehen.

Die von einem Druckluftkompressor erzeugte feuchte, ölige und schmutzige Druckluft wird über den Lufteinlass 6 in die Luftfilterpatrone eingeleitet, wobei Verschmutzungen durch den Koaleszenzfilter/Grobschmutzfilter 4 abgeschieden werden. Die allerdings noch feuchte Druckluft strömt über die kleinen Durchgangsöffnungen 17 im Granulatgehäuse 5 durch das Trockenmittel 1 und wird durch die hülsenartige Anformung 9 in der Strömungsrichtung umgelenkt, so dass die getrocknete Druckluft über die Zentralöffnung 10 zum Luftauslass 11 gelangt.

Da der gesamte obere Gehäusebereich der erfindungsgemäßen Luftfilterpatrone mit Trockenmittel 1 befüllt werden kann, lässt sich außerdem der Vorfilterbereich so anpassen, dass dieser auch für eine Standardfilterpatrone ohne Koaleszenfilter 4, sondern mit jedwedem geeigneten Grobschmutzfiltermedium, genutzt werden kann und für die Bauweise einer sogenannten OSC-Luftfilterpatrone durch den vorstehend beschriebenen Koaleszenzfilter 4 ausgefüllt werden kann.

### Bezugszeichenliste

- 1: Trockenmittel
- 2: Gehäuse
- 3: Befestigungsflansch
- 4: Koaleszenzfilter/Grobschmutzfilter
- 5: Granulatgehäuse
- 6: Lufteinlass
- 7: Druckfeder
- 8: Dichtlippe
- 9: hülsenartige Anformung
- 10: Zentralöffnung
- 11: Auslass
- 12: Filtervlies
- 13: erste hülsenartige Anformung
- 14: zweite hülsenartige Anformung
- 15: Gewindebohrung
- 16: Öffnungen
- 17: Durchgangsöffnungen

## Patentansprüche

1. Luftfilterpatrone zur Montage an einer Luftaufbereitungsanlage eines Fahrzeuges, umfassend ein ein Trockenmittel (1) beinhaltendes Gehäuse (2) und einen vom Trockenmittel (1) über ein innenliegendes Granulatgehäuse (5) getrennt angeordneten Koaleszenzfilter/Grobschmutzfilter (4), welcher zur Vorfilterung der über einen Lufteinlass (6) einströmenden Druckluft dem Trockenmittel (1) vorgeschaltet ist, wobei das innenliegende kolbenartige Granulatgehäuse (5) axial bewegbar gegenüber dem äußeren Gehäuse (2) angeordnet und an der dem Trockenmittel (1) gegenüberliegenden Stirnseite mit einer Druckfeder (7) beaufschlagt ist, um das im Gehäuse (2) befindliche Trockenmittel (1) zu komprimieren, **dadurch gekennzeichnet, dass** das kolbenartige Granulatgehäuse (5) seitens des Koaleszenzfilters/Grobschmutzfilter (4) eine erste koaxiale hülsenartige Anformung (13) zur Führung der Druckfeder (7) sowie eine die erste hülsenartige Anformung (13) koaxial umgebende zweite hülsenartige Anformung (14) zum Aufstecken des ringförmigen Koaleszenzfilters/Grobschmutzfilter (4) aufweist.

2. Luftfilterpatrone nach Anspruch 1,
**dadurch gekennzeichnet, dass** das kolbenartige Granulatgehäuse (5) mit einer außenradial umlaufenden Dichtlippe (8) zur dynamischen Abdichtung gegenüber der Innenwandung des Gehäuses (2) versehen ist.

3. Luftfilterpatrone nach Anspruch 1,
**dadurch gekennzeichnet, dass** das kolbenartige Granulatgehäuse (5) seitens des Trockenmittels (1) eine koaxiale hülsenartige Anformung (9) zur Umlenkung des Strömungswegs der Druckluft durch das Trockenmittel (1) aufweist.

4. Luftfilterpatrone nach Anspruch 1,
**dadurch gekennzeichnet, dass** das kolbenartige Granulatgehäuse (5) eine Zentralöffnung (10) zum Luftauslass (11) der gefilterten Druckluft aufweist, welche mit einem Filtervlies (12) versehen ist.

5. Luftfilterpatrone nach Anspruch 1,
**dadurch gekennzeichnet, dass** die Druckfeder (7) zwischen dem Granulatgehäuse (5) und einem bodenseitig am Gehäuse (2) angeordneten flachen Befestigungsflansch (3) wirkend angeordnet ist.

6. Luftfilterpatrone nach Anspruch 5,
**dadurch gekennzeichnet, dass** der ringförmige Koaleszenzfilter/Grobschmutzfilter (4) zwischen dem kolbenartige Granulatgehäuse (5) und dem flache Befestigungsflansch (3) angeordnet ist.

7. Luftfilterpatrone nach Anspruch 1,
**dadurch gekennzeichnet, dass** der flache Befestigungsflansch (3) um eine mit dem Luftauslass (11) korrespondierende zentrale Gewindebohrung (15) zur Befestigung an der Luftaufbereitungsanlage herum angeordnete mehrere Öffnungen (10) für den Lufteinlass (6) aufweist.

8. Luftfilterpatrone nach einem der vorstehenden Ansprüche,
**dadurch gekennzeichnet, dass** das kolbenartige Granulatgehäuse (5) im Bereich des hieran zur Anlage kommenden ringförmigen Koaleszenzfilters/Grobschmutzfilter (4) mit mehreren Durchgangsöffnungen (17) zum Hindurchströmen der Druckluft vom Koaleszenzfilters/Grobschmutzfilter (4) zum Trockenmittel (1) versehen ist.

9. Luftfilterpatrone nach einem der vorstehenden Ansprüche,
**dadurch gekennzeichnet, dass** das kolbenartige Granulatgehäuse (5) im Bereich des hieran zur Anlage kommenden ringförmigen Koaleszenzfilters/Grobschmutzfilter (4) derart geformt ist, dass dieses sowohl für Standardfilterpatronen als auch für OSC-Luftfilterpatronen verwendbar ist.

## Claims

1. An air filter cartridge for fitting in an air treatment system of a vehicle, comprising a housing (2) that contains a desiccant (1), and a coalescing filter/coarse dirt filter (4) that is arranged separated from the desiccant (1) by an inner granulate housing (5) and connected upstream of the desiccant (1) in order to pre-filter the compressed air that flows in via an air inlet (6), the inner piston-like granulate housing (5) being arranged such that it can be moved axially in relation to the outer housing (2) and is loaded at the end opposite the desiccant (1) by a compression spring (7) in order to compress the desiccant (1) located in the housing (2), **characterised in that** the piston-like granulate housing (5) has on the side of the coalescing filter/coarse dirt filter (4) a first coaxial sleeve-like moulded projection (13) for guiding the compression spring (7) and a second coaxial sleeve-like moulded projection (14), which coaxially surrounds the first sleeve-shaped moulded project (19), for attaching the annular coalescence filter/coarse dirt filter (4).

2. An air filter cartridge according to claim 1,
**characterised in that** the piston-like granulate housing (5) is provided with an outwardly radially circumferential sealing lip (8) for dynamic sealing in relation to the inner wall of the housing (2).

3. An air filter cartridge according to claim 1,
**characterised in that** on the side of the desiccant (1), the piston-like granulate housing (5) has a coaxial sleeve-like moulded projection (9) for deflecting the flow path of the compressed air through the desiccant (1).

4. An air filter cartridge according to claim 1,
**characterised in that** the piston-like granulate housing (5) has a central opening (10) to the air outlet of the filtered compressed air, this central opening (10) being provided with a filter fleece (12).

5. An air filter cartridge according to claim 1,
**characterised in that** the compression spring (7) is arranged so as to act between the granulate housing (5) and a flat fastening flange (3) arranged on the floor of the housing (2) .

6. An air filter cartridge according to claim 5,
**characterised in that** the annular coalescing filter/coarse dirt filter (4) is arranged between the piston-like granulate housing (5) and the flat fastening flange (3).

7. An air filter cartridge according to claim 1,
**characterised in that** the flat fastening flange (3) has a plurality of openings (10) for the air inlet (6) that are arranged around a central threaded bore (15), which corresponds with the air outlet (11), for fastening to the air treatment system.

8. An air filter cartridge according to any one of the preceding claims,
**characterised in that** in the region of the annular coalescing filter/coarse dirt filter (4) that comes into contact with the piston-like granulate housing (5), the piston-like granulate housing (5) is provided with a plurality of through-openings (17) through which the compressed air flows on its way from the coalescence filter (40) to the desiccant (1).

9. An air filter cartridge according to any one of the preceding claims,
**characterised in that** in the region of the annular coalescing filter/coarse dirt filter (4) that comes into contact with the piston-like granulate housing (5), the piston-like granulate housing (5) is shaped such that it can be used both for standard filter cartridges and for OSC air filter cartridges.

## Revendications

1. Cartouche de filtre à air à monter dans un système de traitement d'air d'un véhicule, comprenant un boîtier (2) contenant un agent (1) dessiccateur et un filtre de coalescence/filtre (4) d'impureté grossière qui est disposé en étant séparé de l'agent (1) dessiccateur par un boîtier (5) intérieur de granulé et qui est monté en amont de l'agent (1) dessiccateur pour préfiltrer l'air comprimé pénétrant par une entrée (6) d'air, le boîtier (5) intérieur de granulé en forme de piston étant monté mobile axialement par rapport au boîtier (2) extérieur et étant appliqué par un ressort (7) de compression, du côté frontal opposé à l'agent (1) dessiccateur, pour comprimer l'agent (1) dessiccateur se trouvant dans le boîtier (2), **caractérisée en ce que** le boîtier (5) de granulé de type en piston a, du côté du filtre de coalescence/filtre (4) d'impureté grossière, une première conformation (13) coaxiale de type en manchon pour guider le ressort (7) de compression, ainsi qu'une deuxième conformation (14) de type en manchon, entourant coaxialement la première conformation (13) de type en manchon pour enfiler le filtre annulaire de coalescence/le filtre (4) annulaire d'impureté grossière.

2. Cartouche de filtre à air suivant la revendication 1,
**caractérisée en ce que** le boîtier (5) de granulé de type en piston est pourvu d'une lèvre (8) d'étanchéité faisant tout le tour radialement à l'extérieur pour l'étanchéité dynamique par rapport à la paroi intérieure du boîtier (2).

3. Cartouche de filtre à air suivant la revendication 1,
**caractérisée en ce que** le boîtier (5) de granulé de type en piston a, du côté de l'agent (1) dessiccateur, une conformation (9) coaxiale de type en manchon pour dévier le trajet d'écoulement de l'air comprimé dans l'agent (1) dessiccateur.

4. Cartouche de filtre à air suivant la revendication 1,
**caractérisée en ce que** le boîtier (5) de granulé de type en piston a une ouverture (10) centrale pour la sortie (11) de l'air comprimé filtré, ouverture qui est pourvue d'un non-tissé (12) filtrant.

5. Cartouche de filtre à air suivant la revendication 1,
**caractérisée en ce que** le ressort (7) de compression est disposé en étant actif entre le boîtier (5) de granulé et une bride (3) de fixation plate disposée du côté du fond du boîtier (2).

6. Cartouche de filtre à air suivant la revendication 5,
**caractérisée en ce que** le filtre annulaire de coalescence/le filtre (4) annulaire d'impureté grossière est disposé entre le boîtier (5) de granulé de type en piston et la bride (3) de fixation plate.

7. Cartouche de filtre à air suivant la revendication 1,
**caractérisée en ce que** la bride (3) de fixation plate a plusieurs ouvertures (10) d'entrée (6) d'air disposées, pour la fixation au système de traitement de l'air, autour d'un taraudage (15) central correspondant à la sortie (11) d'air.

8. Cartouche de filtre à air suivant l'une des revendications précédentes,
**caractérisée en ce que** le boîtier (5) de granulé de type en piston est pourvu, dans la partie du filtre annulaire de coalescence/filtre (4) annulaire d'impureté grossière venant en contact avec lui, de plusieurs ouvertures (7) de passage pour le passage de l'air comprimé du filtre annulaire de coalescence/filtre (4) annulaire d'impureté grossière à l'agent (1) dessiccateur.

9. Cartouche de filtre à air suivant l'une des revendications précédentes,
**caractérisée en ce que** le boîtier (5) de granulé de type en piston est conformé dans la partie du filtre annulaire de coalescence/filtre (4) annulaire d'impureté grossière venant en contact avec lui, de manière à pouvoir être utilisé à la fois pour des cartouches de filtre normalisées et pour des cartouches de filtre d'air OSC.
